# EUROPEAN PATENT APPLICATION

(11) **EP 4 847 451 A1**
(43) Date of publication of application: **02.12.2026**
(21) Application number: 25179012.7
(22) Date of filing: 27.05.2025
(51) Int. Cl.: C01F 11/00, C01F 11/10

(54) **METHOD OF PRODUCING CALCIUM OXIDE FROM A RAW MATERIAL COMPRISING A SOURCE OF CALCIUM SULFATE**

(71) Applicant: Holcim Technology Ltd., 6300 Zug (CH)
(72) Inventor: RAMM, Janko, 5113 Holderbank (CH)
(74) Representative: SONN Patentanwälte GmbH & Co KG

(57) **Abstract**

A method of producing calcium oxide from a raw material comprising a source of calcium sulfate, comprising
a first step of reducing a first portion of the raw material in the presence of a reducing agent in a reduction reactor to obtain calcium sulfide at a temperature of 600-1'100°C, and
a second step of reacting the calcium sulfide and a second portion of the raw material with each other in a desulfurization reactor (3) to obtain calcium oxide and sulfur dioxide at a temperature of 1'000-1'450°C,
wherein the reduction reactor comprises a reduction loop (2) and the first step comprises maintaining a circulating material flow of the raw material and the calcium sulfide in the reduction loop (2) while the raw material is being reduced, and wherein the reduction loop (2) comprises a flow splitter (16) for separating a partial flow from the circulating material flow, and said partial flow is fed to the second step.

## Description

The invention refers to a method of producing calcium oxide and optionally cement clinker from a raw material comprising a source of calcium sulfate.

The production of Portland clinker is traditionally done by preparing a raw meal that comprises limestone and raw clays, and calcining this raw material in a rotary kiln at a temperature of around 1'450°C. During this calcination step, the calcium carbonate in the limestone decarbonates to form carbon dioxide and calcium oxide. Furthermore, the rotary kiln used for the production of Portland clinker is heated by a burner, which produces heat from burning carbon-containing materials, such as fuels and waste materials, and also produces carbon dioxide. These two processes run simultaneously in a Portland clinker manufacturing plant and produce high amounts of carbon dioxide.

An alternative method of production of Portland clinker that does not require the use of calcium carbonate materials is based on the Müller Kühne (MK) process, wherein a source of calcium sulfates is used as a starting material. In the MK-process, calcium sulfate, for example in the form of gypsum, is reduced to calcium sulfide, which reacts with calcium sulfate to give sulfur dioxide and calcium oxide, the latter being the main material to obtain cement. The MK-process takes place at temperatures of around 800°C and above, and requires a source of carbon, such as coke, which acts as a reducing agent. The calcium oxide resulting from the MK-process is further processed to obtain cement clinker.

US 2022/0204403 A1 discloses a method of producing cement and co-producing sulfuric acid from phosphogypsum.

EP 728713 B1 discloses a process where calcium sulfate materials are mixed with reactive carbon, and calcined at a first temperature of over 700°C so as to obtain calcium oxide, and the calcium oxide is then calcined at a temperature of over 1'200°C in the presence of silica, alumina, and iron oxide to obtain clinker. The SO₂ containing flue gas is then treated to be converted to SO₃ to produce sulfuric acid.

In known methods for producing calcium oxide from a source of calcium sulfate, one difficulty lies in controlling the reduction process with sufficient precision to ensure complete and consistent reduction of the calcium sulfate. Conventional methods provide inadequate contact between raw materials and the reducing environment and insufficient control over retention time, resulting in variable reduction degrees and inconsistent product quality. Current processes also lack effective means for monitoring and adjusting the reduction reaction as it progresses.

Therefore, the present invention aims at improving a method of producing calcium oxide and optionally cement clinker from a source of calcium sulfate by overcoming the problems mentioned above.

In order to solve this and other objects, the invention provides a method of producing calcium oxide from a raw material comprising a source of calcium sulfate, comprising
a first step of reducing a first portion of the raw material in the presence of a reducing agent in a reduction reactor to obtain calcium sulfide at a temperature of 600-1'000°C, and
a second step of reacting the calcium sulfide and a second portion of the raw material with each other in a desulfurization reactor to obtain calcium oxide and sulfur dioxide at a temperature of 1'000-1'450°C,
wherein the reduction reactor comprises a reduction loop and the first step comprises maintaining a circulating material flow of the raw material and the calcium sulfide in the reduction loop while the raw material is being reduced, and wherein the reduction loop comprises a flow splitter for separating a partial flow from the circulating material flow, and said partial flow is fed to the second step.

Thus, the invention is based on the idea of providing a reduction loop in which the raw material is circulated until a desired degree of reduction is achieved, with a flow splitter to selectively separate a partial flow from the circulating material flow for further processing. The reduction loop ensures prolonged and intensive contact between the raw material particles and the reducing environment, thereby improving the reduction efficiency and allowing for control over the reduction process. By maintaining the material in circulation until the desired chemical composition is achieved, the invention enables optimization of the reduction process without unnecessarily extending the residence time. Further, by controlling the rate of the partial flow separated from the reduction loop by the flow splitter, one can directly influence the average residence time of the circulating material in the reduction loop, thereby providing a mechanism for process control.

In a preferred embodiment of the invention, the reduction loop comprises a cyclone separator through which the circulating material flow passes and in which the circulating material flow is suspended in a flow of a reductive gas that comprises the reducing agent. The cyclone separator creates an efficient solid-gas contact system wherein the raw material particles are thoroughly dispersed in the reductive gas environment, increasing the surface area available for the reduction reaction and thereby enhancing reaction kinetics. The flow pattern within the cyclone separator generates centrifugal forces that promote intensive mixing and extended contact time between the solid particles and the reductive gas, resulting in a more complete and uniform reduction of the calcium sulfate to calcium sulfide. The suspension of the material in the reductive gas further enables improved temperature control throughout the reduction process, as the gas serves as both a reducing medium and a heat transfer fluid. Moreover, the gas-solid separation function of the cyclone separator permits recirculation of the reductive gas.

In an advantageous embodiment of the invention, the step of maintaining a circulating material flow comprises guiding the material flow from a solid discharge of the cyclone separator to an inlet duct of the cyclone separator. By directing the solid material discharged from the cyclone separator back to the inlet duct, a continuous circulation of the material within the reduction loop is established, which extends the effective residence time of the material in the reducing environment without necessitating an enlargement of the apparatus dimensions. Such recirculation enables the material to undergo multiple passes through the cyclone separator, thereby ensuring that even particles that may have been insufficiently reduced in a single pass are subjected to additional exposure to the reducing agent.

Advantageously, the flow splitter may be arranged at the solid discharge of the cyclone separator or downstream thereof, to separate the partial flow from the recirculation. In this way, a portion of the solid material can be removed after it has undergone the reduction treatment in the cyclone separator, but before it is recirculated back to the inlet duct. The removal of the partial flow via the splitter can be performed continuously or batchwise, with the removed amount of material being replaced by adding fresh raw material to the reduction loop, again either continuously or batchwise.

In another preferred embodiment of the invention, the method further comprises circulating the reductive gas from a gas outlet of the cyclone separator to the inlet duct of the cyclone separator through a gas recirculation loop. By recirculating the reductive gas, the utilization efficiency of the reducing agent is improved, as unreacted reducing agent components remaining in the gas after passing through the cyclone separator are returned to the process rather than being discharged.

In a further preferred embodiment, a fuel, such as CH₄ or biomass, is combusted under a sub-stoichiometric atmosphere in order to obtain one or more reducing agents, such as carbon monoxide and/or H₂, which are provided to the first step of reducing, preferably by being introduced into the gas recirculation loop and/or the reduction loop. This ensures a constant replenishment of reducing agent to the reductive gas while existing reducing agent is being consumed in the reduction reaction, thereby maintaining optimal reducing capacity throughout the process cycle. The sub-stoichiometric combustion simultaneously serves the dual function of generating process heat and producing additional reducing agents in situ. The recirculating gas may also act as a heat transfer medium.

Preferably, the partial flow separated from the circulating material flow, before being fed to the second step, is introduced into the gas recirculation loop, and the gas recirculation loop comprises a further cyclone separator for separating the partial flow from the reductive gas. This specific embodiment allows for the retention time of the materials in the first step of the claimed method to be long enough for forming higher amounts of calcium sulfide. This has the advantage of producing a material having a higher amount of calcium sulfide that is then used in the second step of the claimed method, ensuring that the process has an even better efficiency and conversion to calcium oxide and then clinker.

In another advantageous embodiment of the invention, the method further comprises a preheating step in a preheater for preheating the raw material prior to the first and second steps. By preheating the raw material before it enters the reduction reactor and the desulfurization reactor, the thermal efficiency of the system is significantly enhanced, as a considerable portion of the sensible heat required for the subsequent process steps is introduced at an early stage. An advantage of separating the preheating step from the reducing step is the increased flexibility in selecting the heating medium, as the preheating environment does not require a reductive atmosphere. Preferably, the off-gas from the desulfurization reactor is used for preheating, which enables efficient heat recovery from a process stream that would otherwise be discharged, thereby improving the overall energy efficiency of the system.

Furthermore, the preheating of the raw material facilitates the removal of moisture and volatile components that might otherwise interfere with the reduction chemistry. The preheating step also serves to initiate preliminary chemical transformations in the raw material, such as the dehydration of calcium sulfate hydrates, which conditions the material for more efficient reduction in subsequent steps. Additionally, the preheater can advantageously utilize waste heat recovered from other parts of the process, particularly the hot gases from the reduction reactor and the desulfurization reactor, thereby implementing a heat recovery system that improves the overall thermal efficiency.

A preferred embodiment of the invention provides that the source of calcium sulfate is dried (dehydrated) to a water content of < 2 wt.-%, preferably less < 1 wt.-%, before being introduced into the reduction reactor.

In a preferred embodiment of the invention, the preheater comprises a flow splitter for separating the raw material into the first portion and the second portion of the raw material. The flow splitter enables control over the division of the preheated material into the first portion directed to the reduction reactor and the second portion directed to the desulfurization reactor. Advantageously, removing the material from the preheater via the splitter can be done continuously or batchwise according to process requirements. Fresh material may be added at the same rate as material is removed, again in either a continuous or a batchwise manner, maintaining a stable material balance within the system.

In a particularly advantageous embodiment of the invention, the preheater comprises at least one cyclone separator, through which the raw material flow passes and in which the raw material flow is suspended in a flow of an off-gas coming from the desulfurization reactor. In this way, the cyclone separator creates an efficient gas-solid contact system wherein the raw material particles are thoroughly dispersed in the hot off-gas stream, thereby enhancing heat transfer efficiency through maximized surface contact. The flow pattern within the cyclone separator generates centrifugal forces that promote intensive mixing and extended contact time between the solid particles and the hot gas, resulting in rapid and uniform heating of the raw material. The suspension of the material in the off-gas stream enables direct heat transfer from the gas to the solid particles without intermediate heat exchange surfaces. Additionally, the cyclone separator facilitates effective separation of the heated material from the cooled gas stream after heat exchange has occurred.

Preferably, the raw material is fed into the preheater by introducing the material into an off-gas duct of the desulfurization reactor, where the raw material is suspended and entrained to an inlet duct of the cyclone separator or of a first one of a plurality of consecutive cyclone separators. By introducing the raw material directly into the off-gas duct of the desulfurization reactor, the material particles are immediately suspended in the hot gas stream at its highest temperature point, thereby maximizing the temperature differential for heat transfer and ensuring optimal thermal energy recovery from the off-gas. The suspension of the material in the high-velocity gas stream creates a pneumatic transport system.

In another preferred embodiment of the invention, a partial flow of the reductive gas is branched off from the gas recirculation loop and introduced into the preheater. The transfer of hot reductive gas from the reduction loop to the preheater constitutes an efficient means of heat recovery, utilizing the thermal energy contained in the reduction gases to contribute to the preheating of the raw material.

Preferably, a third step comprises calcining the calcium oxide in the presence of silica, alumina, and iron oxide containing materials to obtain cement clinker. The second step and the third step are preferably carried out in the same desulfurization reactor. Silica, alumina and iron oxide react with calcium oxide and form clinker minerals, in particular alite (Ca₃SiO₅), belite (Ca₂SiO₄), tricalcium aluminate (Ca₃Al₂O₆), and tetracalcium aluminoferrite (Ca₄Al₂Fe₂O₁₀). These corrective materials can be added to the raw material that is fed into the reduction reactor and/or added to the material stream that is introduced into the desulfurization reactor.

In a preferred embodiment, the silica, alumina, and iron oxide containing materials comprise recycled or waste materials. In a preferred embodiment, the silica, alumina, and iron oxide containing materials comprise at least 40 wt.-% of recycled or waste materials.

The recycled or waste materials can be selected from any of the following materials: mineral waste materials from construction and demolition such as concrete demolition waste, recycled aggregates, recycled bricks, coal ashes, or steel slags. The use of waste and recycled materials decreases the environmental impact of this production process, by minimizing the need to use virgin materials.

By carrying out the transformation of a calcium sulfate source into calcium oxide or cement clinker in a two-step process or a three-step process, respectively, and to conduct the first step in a separate reactor, each step may be optimized with respect to its process conditions, including atmosphere and temperature. The process conditions in the reduction reactor can be adjusted to the requirements of the corresponding chemical reactions, such as lower temperature and a reducing atmosphere. In contrast, the second step and/or the third step requires a higher temperature and an oxidizing atmosphere. Since an optimal temperature may be adjusted for each of the first and second steps, the energy efficiency of the overall process is increased.

The first step is carried out at a temperature of 600-1'100°C and the second step is carried out at a temperature of 1'000-1'450°C. The third step may optionally be carried out at a temperature of 1'350-1'450°C. The first step may preferentially be carried out at a temperature of 600-800°C. The first step is carried out at a lower temperature than the second step.

The first and the second steps are preferably carried out consecutively, without the temperature of the material feed withdrawn from the reduction reactor getting lower than 600-1'100°C before the second step occurs. The two steps may alternatively also be separated in two locations. In that case the material feed withdrawn from the reduction reactor at the first location would need to be cooled down and transported to the second location.

It is desirable to transform the entire amount of calcium sulfate into calcium oxide, in order to avoid any uncontrolled amounts of calcium sulfate in the cement clinker, which would affect the properties of the final product. Therefore, it is preferable to provide the correct ratio of calcium sulfide to calcium sulfate in the second step.

Preferably, a ratio of calcium sulfide and the second portion of the calcium sulfate present in the second step is adjusted by controlling the reduction process taking place in the reduction reactor, said controlling preferably comprising at least one of adjusting the partial flow that is separated from the circulating material flow by means of the flow splitter, adjusting the temperature in the reduction reactor and/or adjusting the residence time of the raw material in the reduction reactor.

The step of controlling the reduction process can comprise measuring characteristics of the materials, such as SO3 content, calcium sulfide content, or clinker mineralogy. These measurements can be done routinely by XRD analysis or spectroscopy, either by taking samples at specific time intervals, e.g. every 20 minutes, or using online measurement systems.

Preferably, additional measurements of calcium sulfate and calcium sulfide are carried out on materials as they exit the reduction reactor to best control the entire process. Based on these measurements, the residence time of the material in the reduction reactor can be adjusted and optimized.

The composition of off-gasses withdrawn from the reduction reactor can also be analyzed, including determining at least one of the content of carbon monoxide, the content of sulfur dioxide, the content of oxygen and the step of controlling the reduction process is carried out as a function of said composition.

According to a preferred embodiment of the invention, thermal energy is provided to the first and/or the second and/or the third step, preferably to the reduction reactor and/or the desulfurization reactor by combusting a fuel, preferably a non-fossil fuel such as hydrogen or biomass. The combustion of non-fossil fuel, such as hydrogen as a fuel source for heating the reactor(s) provides a clean and environmentally friendly alternative to conventional fossil fuels. Hydrogen combustion produces only water vapor as a byproduct, effectively eliminating the carbon dioxide emissions associated with traditional reactor heating methods.

According to another preferred embodiment of the invention, the reduction reactor is heated using electrical energy. For example, radiative electrical heat devices can be installed on the walls of the reduction reactor, and/or the hydrogen can be heated using electrical energy prior to entering the reduction reactor. The reduction reactor can also be heated using a combination of heat generated from electrical energy, and combustion of hydrogen.

Various sources of calcium sulfate may be used as a starting material for the first step. In particular, the source of calcium sulfate may be gypsum, hemihydrate, waste calcium sulfate and/or phosphogypsum, the latter being widely available as it is most often landfilled in large quantities, being a by-product of the production of phosphate-based fertilizers or phosphoric acid.

In order to maximize the surface to volume ratio of the calcium sulfate source, thereby increasing the efficiency of the reaction between the calcium sulfate source and the reducing agent during the first step, the source of calcium sulfate is preferably provided in the form of a powder, preferably having a maximum particle size of 300 µm. Herein, the particle size is measured by sieving.

Preferably, the sulfur dioxide obtained in the second step is withdrawn from the second step and used to produce sulfuric acid.

In particular, steam that is generated in the first step and withdrawn from the reduction reactor can advantageously be used to produce sulfuric acid from the sulfur dioxide.

The process of producing sulfuric acid from sulfur dioxide may preferably be carried out by a method referred to as "contact process", e.g. as follows: First, sulfur dioxide is converted into sulfur trioxide using a vanadium(V) oxide catalyst. The sulfur trioxide cannot be directly mixed with water to produce sulfuric acid, because the direct reaction of sulfur trioxide with water is highly exothermic and can lead to the formation of a sulfuric acid fog, which is hazardous. Instead, sulfur trioxide is first reacted with sulfuric acid to produce oleum (H₂S₂O₇), also known as fuming sulfuric acid. Then, this oleum is carefully diluted with water (obtained by condensing the steam) to form concentrated sulfuric acid. Therefore, the steam extracted from the first step is used in the final dilution stage to produce sulfuric acid from oleum.

According to a second aspect of the invention, an apparatus is provided for producing calcium oxide from a raw material comprising a source of calcium sulfate, comprising:
a reduction reactor configured to reduce a first portion of the raw material in the presence of a reducing agent to obtain calcium sulfide,
a desulfurization reactor configured to react the calcium sulfide and a second portion of the raw material with each other to obtain calcium oxide and sulfur dioxide,
wherein the reduction reactor comprises a reduction loop configured to maintain a circulating material flow of the raw material and the calcium sulfide while the raw material is being reduced, and
wherein the reduction loop comprises a flow splitter configured to separate a partial flow from the circulating material flow, and a connection to feed said partial flow to the desulfurization reactor.

Preferably, the reduction loop comprises a cyclone separator, configured to allow the circulating material flow to pass through and to suspend the circulating material flow in a flow of a reductive gas that comprises the reducing agent.

Preferably, the reduction loop comprises a recirculation duct configured to guide the material flow from a solid discharge of the cyclone separator to an inlet duct of the cyclone separator.

Preferably, the apparatus further comprises a gas recirculation loop configured to circulate the reductive gas from a gas outlet of the cyclone separator to the inlet duct of the cyclone separator.

Preferably, the gas recirculation loop is configured to receive the partial flow separated from the circulating material flow before being fed to the desulfurization reactor, and wherein the gas recirculation loop comprises a further cyclone separator configured to separate the partial flow from the reductive gas.

Preferably, the apparatus further comprises a preheater configured to preheat the raw material prior to introducing it to the reduction reactor and the desulfurization reactor.

Preferably, the preheater comprises a flow splitter configured to separate the preheated raw material into the first portion and the second portion of the raw material.

Preferably, the preheater comprises at least one cyclone separator, through which the circulating raw material flow passes and in which the circulating raw material flow is suspended in a flow of an off-gas coming from the desulfurization reactor.

Preferably, the apparatus further comprises a gas duct configured to branch off a partial flow of the reductive gas from the gas recirculation loop and to introduce it into the preheater.

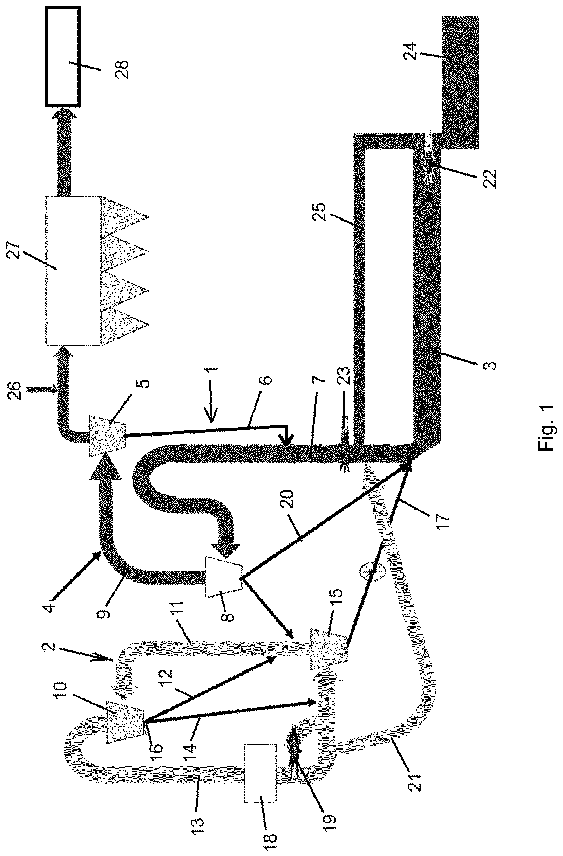

The invention will now be described by means of an exemplary embodiment illustrated in Fig. 1. Fig. 1 shows a preheater 1, a reduction loop 2, and a rotary kiln 3. Raw meal 4 is introduced into the preheater 1 at a continuous feed rate.

The preheater 1 comprises a cyclone separator 5, a line 6 for feeding raw material from the solid discharge of the cyclone separator 5 to the riser duct 7, another cyclone separator 8 for separating preheated raw meal from the preheater 1 and a duct 9 for guiding preheating gas from the cyclone separator 8 to the cyclone separator 5. Within the preheater 1, the raw material is suspended in hot preheating gases, namely exhaust gas coming from the kiln 3. The preheated raw material is removed from the preheater 1 via the solid discharge of the cyclone separator 8, wherein a flow splitter (not shown) is arranged to obtain a first portion of the material flow being fed to the reduction loop 2 and a second portion of the separated material flow being fed to the inlet of the rotary kiln 3.

Preheating gas leaving the preheater 1 at the gas outlet of the cyclone separator 5 may be cooled by adding cold air at 26. Further, dust may be removed from the cooled gas in a bag filter 27 and further purification may be carried out in a scrubber 28.

The reduction loop 2 represents the first step of the process where calcium sulfate is reduced to calcium sulfide. The reduction loop 2 comprises a cyclone separator 10, a recirculation duct 12 for guiding the material flow from a solid discharge of the cyclone separator 10 to an inlet duct 11 of the cyclone separator 10. Thus, a circulating material flow is maintained through the inlet duct 11, into which preheated raw material is introduced, the cyclone separator 10 and the recirculation duct 12. Further, a flow splitter 16 is provided that removes a partial flow from the material flow coming from the solid discharge of the cyclone separator 10. The partial flow removed from the reduction loop 2 is guided through the line 14 and fed to the kiln 3 via another cyclone separator 15 and the connection 17. Within the cyclone separator 10 the raw material is suspended in a reductive gas that is separated from the reduction loop 2 via the gas outlet of the cyclone separator 10 and recirculated to the reduction loop 2 through the gas recirculation loop 13 configured to circulate the reductive gas from a gas outlet of the cyclone separator to the inlet duct 11 of the cyclone separator. A heat exchanger 18 is provided for recovering thermal energy from the reductive gas flowing through the gas recirculation loop 13.

A fuel, such as CH₄ or biomass, is combusted under a sub-stoichiometric atmosphere in a burner 19 in order to heat the reductive gas to the desired temperature and also to obtain one or more reducing agents, such as carbon monoxide and/or H₂, which are introduced into the gas recirculation loop 13. Further, the gas recirculation loop 13 receives the partial flow separated from the circulating material via the line 14, wherein the gas recirculation loop 13 comprises a further cyclone separator 15 configured to separate the partial flow from the reductive gas.

A portion of the reductive gas from the gas recirculation loop 13 may be branched off via the line 21 and introduced into the riser duct 7.

Calcium sulfide is introduced into the kiln 3 via the line 17, while calcium sulfate is introduced into the kiln 3 via the line 20. The kiln 3 functions as a desulfurization reactor configured to react the calcium sulfide and the calcium sulfate with each other to obtain calcium oxide and sulfur dioxide. Further, silica, alumina, and iron oxide containing materials may be added to the kiln 3 so that calcium oxide may be transformed into cement clinker. The temperatures required in the kiln 3 for the desulfurization and optional clinkerization step are provided by burning a fuel in a burner 22.

The off-gas from the kiln 3 is directed to the preheater 1, where its thermal energy is used to preheat the raw material. Additional thermal energy may be added by means of the additional burner 23.

The hot cement clinker leaving the kiln 3 may be cooled in a clinker cooler 24, wherein cooling air coming from the clinker cooler 24 may be introduced into the riser duct 7 of the preheater 1 via the line 25.

## Claims

1. A method of producing calcium oxide from a raw material comprising a source of calcium sulfate, comprising
a first step of reducing a first portion of the raw material in the presence of a reducing agent in a reduction reactor at a temperature of 600-1'100°C to obtain calcium sulfide, and
a second step of reacting the calcium sulfide and a second portion of the raw material with each other in a desulfurization reactor (3) at a temperature of 1'000-1'450°C to obtain calcium oxide and sulfur dioxide,
wherein the reduction reactor comprises a reduction loop (2) and the first step comprises maintaining a circulating material flow of the raw material and the calcium sulfide in the reduction loop (2) while the raw material is being reduced, and wherein the reduction loop (2) comprises a flow splitter (16) for separating a partial flow from the circulating material flow, and said partial flow is fed to the second step.

2. The method according to claim 1, wherein the reduction loop comprises a cyclone separator (10), through which the circulating material flow passes and in which the circulating material flow is suspended in a flow of a reductive gas that comprises the reducing agent.

3. The method according to claim 2, further comprising circulating the reductive gas from a gas outlet of the cyclone separator (10) to an inlet duct (11) of the cyclone separator (10) through a gas recirculation loop (13).

4. The method according to any one of claims 1 to 3, further comprising a preheating step in a preheater (1) for preheating the raw material prior to the first and second steps.

5. The method according to claim 4, wherein the preheated raw material is guided through a flow splitter for separating the raw material into the first portion and the second portion of the raw material.

6. The method according to claim 4 or 5, wherein the preheater comprises at least one cyclone separator (5,8), through which the raw material flow passes and in which the raw material flow is suspended in a flow of an off-gas coming from the desulfurization reactor (3).

7. The method according to any one of claims 4 to 6, wherein a partial flow of the reductive gas is branched off from the gas recirculation loop (13) and introduced into the preheater (1).

8. The method according to any one of claims 1 to 7, further comprising a third step of calcining the calcium oxide in the presence of silica, alumina, and iron oxide containing materials to obtain cement clinker, wherein the third step is preferably carried out in the desulfurization reactor (3).

9. The method according to any one of claims 1 to 8, wherein the source of calcium sulfate is gypsum, hemihydrate, waste calcium sulfate, and/or phosphogypsum.

10. The method according to any one of claims 1 to 9, wherein a fuel, such as CH₄ or biomass, is combusted under a sub-stoichiometric atmosphere in order to obtain one or more reducing agents, such as carbon monoxide and or H₂, which are provided to the first step of reducing, preferably by being introduced into the gas recirculation loop (13) and/or the reduction loop (2).

11. An apparatus for producing calcium oxide from a raw material comprising a source of calcium sulfate, comprising:
a reduction reactor configured to reduce a first portion of the raw material in the presence of a reducing agent to obtain calcium sulfide,
a desulfurization reactor (3) configured to react the calcium sulfide and a second portion of the raw material with each other to obtain calcium oxide and sulfur dioxide,
wherein the reduction reactor comprises a reduction loop (2) configured to maintain a circulating material flow of the raw material and the calcium sulfide while the raw material is being reduced, and
wherein the reduction loop (2) comprises a flow splitter (16) configured to separate a partial flow from the circulating material flow, and a connection (17) to feed said partial flow to the desulfurization reactor (3).

12. The apparatus according to claim 11, wherein the reduction loop (2) comprises a cyclone separator (10), configured to allow the circulating material flow to pass through and to suspend the circulating material flow in a flow of a reductive gas that comprises the reducing agent.

13. The apparatus according to claim 12, further comprising a gas recirculation loop (13) configured to circulate the reductive gas from a gas outlet of the cyclone separator (10) to the inlet duct (11) of the cyclone separator (10).

14. The apparatus according to any one of claims 11 to 13, further comprising a preheater (1) configured to preheat the raw material prior to introducing it to the reduction reactor and the desulfurization reactor (3).

15. The apparatus according to claim 14, wherein the preheater (1) comprises a flow splitter configured to separate the preheated raw material into the first portion and the second portion of the raw material.

16. The apparatus according to claim 14 or 15, further comprising a gas duct (21) configured to branch off a partial flow of the reductive gas from the gas recirculation loop (13) and to introduce it into the preheater (1).
